# EUROPÄISCHE PATENTSCHRIFT

(11) **EP 0 666 806 B1**
(45) Veröffentlichungstag und Bekanntmachung des Hinweises auf die Patenterteilung: **12.06.1996**
(21) Anmeldenummer: 93924595.7
(22) Anmeldetag: 05.11.1993
(51) Int. Cl.: B60R 13/08, G10K 11/16, B32B 3/12

(54) **LUFTSCHALL ABSORBIERENDES FORMTEIL**
MOULDED ARTICLE DESIGNED TO ABSORB AIRBORNE SOUND
PIECE MOULEE QUI ABSORBE LE BRUIT AERIEN

(30) Priorität: 07.11.1992 DE 4237513
(43) Veröffentlichungstag der Anmeldung: 16.08.1995
(73) Patentinhaber: Pelzer, Helmut, D-58313 Herdecke (DE)
(72) Erfinder: Pelzer, Helmut, D-58313 Herdecke (DE); Akyol, Tarik, Dr., D-58454 Witten (DE); Keller, Hans Peter, CH-5034 Suhr (CH); Günzel, Rolf, D-59227 Ahlen (DE)
(74) Vertreter: Hilleringmann, Jochen, Dipl.-Ing.
(86) Internationale Anmeldenummer: EP9303101
(87) Internationale Veröffentlichungsnummer: WO9411222

(56) Entgegenhaltungen:
- DE-A- 1 901 828
- DE-A- 3 506 488
- DE-A- 3 716 616
- DE-A- 3 832 583
- DE-C- 4 011 705
- DATABASE WPI Week 9240, Derwent Publications Ltd., London, GB; AN 92-327073 & JP,A,4 232 735 (KOKUSHIN SANGYO) 21. August 1992

## Beschreibung

Die Erfindung betrifft ein der Luftschallabsorption dienendes Formteil vorwiegend zur Verwendung in dem Motorraum von Kraftfahrzeugen und insbesondere als Schallabsorber innerhalb von teilweisen und vollständigen Motorkapselungen.

Derartige Formteile sind bekannt. So ist in der DE 40 11 705 C2 ein Luftschall absorbierendes Formteil beschrieben, das auf seiner zur Schallquelle gerichteten Oberfläche mit Helmholtz-Resonatoren besetzt ist. Diese sollen derart angeordnet sein, daß die im Wirkungsbereich des jeweils tieferfrequenten Helmholtz-Resonators befindlichen benachbarten Helmholtz-Resonatoren voneinander verschiedene Resonanzfrequenzen besitzen. Die die Resonatoren tragende Fläche des Formteils umfaßt als Plattenabsorber die Helmholtz-Resonatoren formschlüssig, wobei die Öffnungen der Helmholtz-Resonatoren frei bleiben. Für durch die Resonatoröffnungen eindringende Feuchtigkeit und dgl. sind Abflußöffnungen vorgesehen.

Derartige Formteile haben sich bewährt, jedoch weist insbesondere der abgedeckte Frequenzumfang ebenso wie der Absorptionssgrad in vielen Fällen bzw. für viele Fälle Unzulänglichkeiten auf. Außerdem ist die Ableitung in die Resonatoren eindringender Flüssigkeit zwar vorgesehen, jedoch haben sich Rückstände und dadurch bedingte Beeinträchtigungen insbesondere bei Verwendung im Motorraum als kaum vermeidbar erwiesen.

DE-A-38 32 583 beschreibt ein Schallabsorptionssystem mit zwei Platten aus elastomerem Material, wobei die Oberplatte, bei der es sich um eine Folie mit einer Stärke von bis zu 0,1 mm handelt, Erhebungen aufweist, die nach Verbindung mit der Unterplatte unterschiedliche Kammervolumen und unterschiedliche Höhen besitzen. DE-A-37 16 616 beschreibt eine akustische Abdichtung für einen rohrförmigen Körper mit einem Füllkörper aus offenporigem PU-Schaum und einer PU-Hüllfolie von ca. 0,05 mm Dicke, die das Eindringen von Feuchtigkeit in den offenporigen PU-Schaum verhindern soll.

Der Erfindung liegt die Aufgabe zugrunde, ein Formteil zur Luftschallabsorption bereitzustellen, das größere Frequenzbereiche abzudecken geeignet ist und das außerdem keine zur Verschmutzung neigende Öffnungen aufweist.

Diese Aufgabe wird durch ein Formteil mit den Merkmalen des Anspruchs 1 gelöst; die Merkmale vorteilhafter Ausgestaltungen der Erfindung sind jeweils in den Unteransprüchen angegeben.

Das erfindungsgemäße Formteil weist einen porösen Absorber auf, der durch einen auf beiden Seiten durch je eine PU-Folie mit einer Dicke von weniger als 90 µm vollflächig abgedichteten Kern aus offenporigem PU-Schaum von mindestens 3 mm und höchstens ca. 15 mm Dicke gebildet ist. Der poröse Absorber weist von einer gemeinsamen Grundfläche ausgehende, mit dem bzw. beim Spritzgang eingeformte Hohlkammern auf, die nur zu ihren Fußflächen hin offen sind und unterschiedliche Kammervolumen sowie - von der Fußfläche aus gemessen - unterschiedliche Höhen zwischen mindestens ca. 8 mm und höchstens ca. 60 mm aufweisen. Bevorzugt liegen die Höhenabmessungen zwischen ca. 15 mm und ca. 50 mm.

Dabei formen die Wände der Hohlkammern bevorzugt im wesentlichen Pyramidenstümpfen gleichende Gebilde. Die Fußflächen der Pyramidenstümpfe sind vorteilhaft in ihrer Form derart an die vorgegebenen Abmessungen des Formteils angepaßt, daß eine möglichst vollständige Ausfüllung möglich ist. Sie können regelmäßige oder unregelmäßige Vieleckform haben, wobei die viereckige, insbesondere Quadrat- oder Rechteckform, ggf. auch - insbesondere in den Randbereichen - die Dreiecksform, bevorzugt wird. Die Zahl von acht Ecken, besser sechs Ecken, sollte dabei nicht überschritten werden. Bevorzugt mißt der Durchmesser des um die Fußfläche gelegten Hüllkreises mindestens ca. 20 mm und höchstens ca. 200 mm. Vorteilhaft werden Durchmesser des Hüllkreises um die Fußflächen gewählt, die zwischen ca. 60 mm und ca. 120 mm liegen, während die Neigung der Wandflächen der Pyramidenstümpfe zur Senkrechten vorteilhaft im Bereich von ca. 5° bis maximal ca. 30° liegt bzw. Kegelwinkel gewählt werden, die zwischen ca. 10° und 60° liegen.

Der Schaumstoffkern des Absorbers ist gegen das Eindringen von Feuchtigkeit und Flüssigkeiten beidseitig mit einer PU-Folie abgedeckt, deren Dicke so bemessen wird, daß das Eindringen der Schallwellen in den Schaum praktisch nicht behindert wird. Um dies zu gewährleisten soll sie weniger als 90 µm betragen. Als geeignet haben sich Dicken der Hüllfolie erwiesen, die zwischen 20 µm und 80 µm liegen, wobei die Obergrenze nach Möglichkeit bei ca. 60 µm liegen sollte. Die Verbindung zwischen Hüllfolien und Schaumstoffkern erfolgt bei der Herstellung dadurch, daß das Aufschäumen erst nach dem Einspritzen der Schaummasse zwischen die beiden Folien erfolgt.

Das vorhergehend beschriebene Formteil wird im allgemeinen auf einen Träger, der beispielsweise die Motorkapsel sein kann, aufgesetzt. Dies kann durch Kleben, wegen der leichteren Trennung zur Wiederverwertung (Recycling) jedoch besser durch Aufklipsen geschehen.

Die Herstellung des Formteils erfolgt, wie bereits angedeutet, vorteilhaft derart, daß die Form nach dem Anlegen je einer Hüllfolie an den Formenboden und den Formendeckel durch Anlegen von Unterdruck geschlossen und in den Zwischenraum zwischen den beiden Folien der den Absorber bildende PU-Schaum unter Verdrängung des vorhanden Luftvolumens eingespritzt wird und sich dann mit den Folien verbindet.

Anhand des in der beigegebenen Zeichnung dargestellten Ausführungsbeispiels wird die Erfindung erläutert. Es ist:
- Fig. 1: senkrechter Schnitt durch ein auf einem Träger sitzendes erfindungsgemäßes Formteil;
- Fig. 2: vergrößerter Ausschnitt gem. Fig. 1.

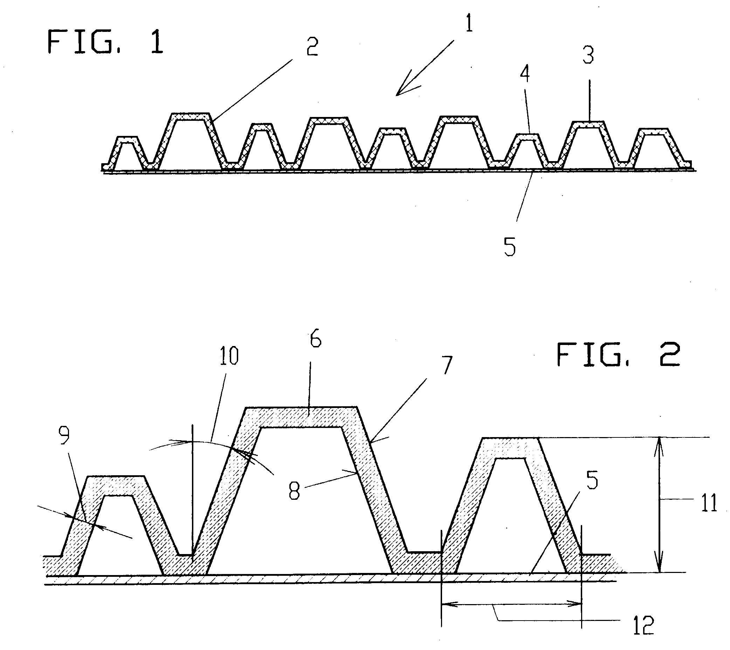

Die Fig. 1 läßt deutlich die Pyramidenstumpf-Form ebenso wie die unterschiedlichen Abmessungen der Hohlkammern 2, 3, 4 erkennen. Ebenso werden die vielfältigen Variationsmöglichkeiten für die als Resonatoren wirkenden Wände der Pyramidenstümpfe 2 - 4 deutlich. Das als Absorber wirkende Formteil 1 ist auf einen Träger 5 aufgesetzt und durch Kleben oder besser Klipsen befestigt.

Der vergrößerte Ausschnitt der Fig. 2 läßt die Art der im vorhergehenden beschriebenen unterschiedlichen Abmessungen erkennen. Während die Dicke 9 der Hände 6 mindestens 3 mm, höchstens jedoch ca. 15 mm betragen soll, kann die Höhe 11 der Pyramidenstümpfe 2 - 4 maximal zwischen ca. 8 mm und höchstens 60 mm, besser jedoch zwischen ca. 15 mm und ca. 50 mm liegen. Die Durchmesser der die Fußfläche der einzelnen Pyramidenstümpfe 2; 3; 4 umschreibenden Hüllkreise können zwischen 20 mm und 200 mm gewählt werden, liegen jedoch bevorzugt zwischen ca. 60 mm und ca. 120 mm.

Wie in Fig. 2 dargestellt, ist der absorbierende Kern 6 des Formteils 1 beidseits durch je eine PU-Abdeckfolie 7 bzw. 8 abgedeckt, die das Eindringen von Flüssigkeiten verhindern, das Eindringen der Schallwellen jedoch nicht oder nur geringfügig behindern.

### ZUSAMMENSTELLUNG DER BEZUGSZEICHEN

- 1: Absorber
- 2: Hohlkammer, Pyramidenstumpf
- 3: Hohlkammer, Pyramidenstumpf
- 4: Hohlkammer, Pyramidenstumpf
- 5: Träger; Grundfläche
- 6: Kern, Absorberkern
- 7: Hüllfolie
- 8: Hüllfolie
- 9: Dicke
- 10: Neigung
- 11: Höhe
- 12: Durchmesser, Fußkreisdurchmesser

## Patentansprüche

1. Formteil zur Luftschallabsorption vorwiegend zur Verwendung in dem Motorraum von Kraftfahrzeugen und insbesondere als Schallabsorber innerhalb von teilweisen oder vollständigen Motorkapselungen,
**gekennzeichnet durch**
einen porösen Absorber (1) mit einem Kern (6), der auf beiden Seiten durch je eine PU-Folie (7,8), deren Dicke weniger als 90 µm beträgt, vollflächig abgedichtet ist und der durch offenporigen PU-Schaum von mindestens 3 mm und höchstens ca. 15 mm Dicke (9) gebildet ist und der von einer gemeinsamen (gedachten) Grundfläche (5) ausgehende, mit dem Spritzvorgang eingeformte Hohlkammern (2,3,4) aufweist, die nur zur Grundfläche (5) hin offen sind und unterschiedliche Kammervolumen sowie unterschiedliche von der Grundfläche aus gemessene Höhen (11) aufweisen.

2. Formteil nach Anspruch 1, dadurch gekennzeichnet, daß die Wände der Hohlkammern (2,3,4) Pyramidenstümpfe bilden, deren Fußflächen offen sind, und daß die Pyramidenstümpfe Höhen (11) zwischen mindestens ca. 8 mm und höchstens ca. 60 mm aufweisen.

3. Formteil nach Anspruch 2, dadurch gekennzeichnet, daß die pyramidenstumpfförmigen Hohlkammern (2,3,4) Höhen (11) zwischen ca. 15 und ca. 50 mm aufweisen.

4. Formteil nach einem der Ansprüche 1 bis 3, dadurch gekennzeichnet, daß die Fußflächen der Pyramidenstümpfe (2,3,4) eine an die vorgegebenen Gesamtabmessungen des Formteils (1) angepaßte Vieleckform mit höchstens acht Ecken, insbesondere mit höchstens sechs Ecken aufweisen.

5. Formteil nach Anspruch 4, dadurch gekennzeichnet, daß der Durchmesser des Hüllkreises um die Fußfläche mindestens ca. 20 mm und höchstens ca. 200 mm beträgt.

6. Formteil nach Anspruch 4 oder 5, dadurch gekennzeichnet, daß der Durchmesser des Hüllkreises um die Fußfläche zwischen ca. 60 mm und ca. 120 mm liegt.

7. Formteil nach einem der vorhergehenden Ansprüche, dadurch gekennzeichnet, daß die Wandflächen der Pyramidenstümpfe (2,3,4) zur Senkrechten eine Neigung (10) von ca. 5° bis maximal ca. 30° aufweisen bzw. daß der Kegelwinkel der Pyramidenstümpfe (2,3,4) zwischen ca. 10° und 60° gewählt ist.

8. Formteil nach einem der vorhergehenden Ansprüche, dadurch gekennzeichnet, daß die Dicke der PU-Folien (7,8) zwischen 20 µm und 80 µm liegt.

9. Formteil nach Anspruch 8, dadurch gekennzeichnet, daß die Dicke der PU-Folien (7,8) zwischen 20 µm und 60 µm liegt.

10. Formteil nach einem der vorhergehenden Ansprüche, dadurch gekennzeichnet, daß das Formteil (1) auf einen Träger (5) aufgesetzt, insbesondere aufklebbar oder aufklipsbar ist.

11. Formteil nach Anspruch 10, dadurch gekennzeichnet, daß der Träger (5) die Motorkapsel ist.

12. Verfahren zur Herstellung des Formteils nach einem der vorhergehenden Ansprüche unter Verwendung einer verschließbaren Vakuum-Spritzform mit einem Formenboden und einem Formendeckel, dadurch gekennzeichnet, daß die Vakuum-Spritzform nach dem durch Anlegen von Unterdruck erfolgenden Anlegen je einer Hüllfolie an den Formenboden und den Formendeckel geschlossen wird, und daß in den Zwischenraum zwischen den beiden Hüllfolien der den Absorber bildende PU-Schaum unter Verdrängung des vorhandenen Luftvolumens eingespritzt wird.

## Claims

1. A molded article for the absorption of airborne sound, to be used principally in the engine compartment of motor vehicles and particularly as a sound absorber internally of partial and complete motor encapsulations,
**characterized by**
a porous absorber (1) of which the core (6), being sealed on both sides over its complete surface by a respective PU film (7,8) of a thickness less than 90 µm, is made from an open-pored PU foam of a thickness (9) of at least 3 mm and about 15 mm at the most and comprises cavities (2,3,4) originating on the common (imaginary) bottom face (5) and formed by the injection molding process, said cavities (2,3,4) being open only towards the bottom face (5) and having different cavity volumes and different heights (11) measured from the bottom face.

2. The molded article according to claim 1, characterized in that the walls of the cavities (2,3, 4) are shaped as truncated pyramids having open base faces, and the heights (11) of the truncated pyramids are between a minimum of about 8 mm and a maximum of about 60 mm.

3. The molded article according to claim 2, characterized in that the cavities (2,3,4) shaped as truncated pyramids have heights (11) between about 15 mm and about 50 mm.

4. The molded article according to any one of claims 1 to 3, characterized in that the base faces of the truncated pyramids (2,3,4) are of a polygonal shape adapted to the predetermined total dimensions of the molded article (1), and at the most have eight edges, preferably six edges at the most.

5. The molded article according to claim 4, characterized in that the diameter of the envelope circle around the base face is at least about 20 mm and at the most about 200 mm.

6. The molded article according to claim 4 or 5, characterized in that the diameter of the envelope circle around the base face is between about 60 mm and about 120 mm.

7. The molded article according to any one of the preceding claims, characterized in that the inclination (10) of the wall surfaces of the truncated pyramids (2,3,4) relative to the vertical line is in the range from about 5° to a maximum of about 30°, or that the cone angle of the truncated pyramids (2,3,4) is selected between about 10° and about 60°.

8. The molded article according to any one of the preceding claims, characterized in that the thickness of the PU films (7,8) is between 20 µm and 80 µm.

9. The molded article according to claim 8, characterized in that the thickness of the PU films (7,8) is between 20 µm and 60 µm.

10. The molded article according to any one of the preceding claims, characterized in that the molded article (1) is mounted on a carrier (5), particularly by bonding or, preferably, by a clip connection.

11. The molded article according to claim 10, characterized in that the carrier (5) is the engine capsule.

12. A method for producing the molded article according to any one of the preceding claims using a closeable a vacuum injection mold comprising a mold bottom and a mold top, characterized in that, after laying a respective surrounding film against the bottom of the mold and the top of the mold by generating a vacuum force, the vacuum injection mold is closed, and the PU foam forming the absorber is injected into the intermediate space between the two surrounding films while displacing the existing air volume.

## Revendications

1. Pièce moulée pour l'absorption du bruit transmis par l'air, essentiellement pour une utilisation dans le compartiment-moteur de véhicules automobiles et en particulier comme absorbeur du son à l'intérieur de blindages partiels ou complets du moteur, caractérisée par un absorbeur poreux (1) avec un noyau (6) qui est rendu étanche sur toute la surface, sur chacun des deux côtés, par une feuille de polyuréthane (7, 8), dont l'épaisseur est inférieure à 90 µm, et qui est formé par de la mousse de polyuréthane à pores ouverts, ayant une épaisseur (9), d'au moins 3 mm et d'au plus 15 mm environ, et qui présente des compartiments creux (2, 3, 4) partant d'une surface de base (5) commune (imaginaire) et moulés par l'opération d'injection, qui ne sont ouverts que vers la surface de base (5) et qui présentent des volumes différents ainsi que des hauteurs (11) différentes, mesurées à partir de la surface de base.

2. Pièce moulée selon la revendication 1, caractérisée en ce que les parois des compartiments creux (2, 3, 4) forment des pyramides tronquées dont les surfaces d'embase sont ouvertes, et en ce que les pyramides tronquées ont des hauteurs (11) entre au moins 8 mm environ et au plus 60 mm environ.

3. Pièce moulée selon la revendication 2, caractérisée en ce que les compartiments creux (2, 3, 4) en forme de pyramides tronquées ont des hauteurs (11) entre environ 15 et environ 50 mm.

4. Pièce moulée selon l'une des revendications 1 à 3, caractérisée en ce que les surfaces d'embase des pyramides tronquées (2, 3, 4) ont une forme polygonale adaptée aux dimensions totales prédéfinies de la pièce moulée (1), avec au plus huit coins, en particulier avec au plus six coins.

5. Pièce moulée selon la revendication 4, caractérisée en ce que le diamètre du cercle circonscrit à la surface d'embase est d'au moins 20 mm environ et d'au plus 200 mm environ.

6. Pièce moulée selon la revendication 4 ou 5, caractérisée en ce que le diamètre du cercle circonscrit à la surface d'embase se situe entre environ 60 mm et environ 120 mm.

7. Pièce moulée selon l'une des revendications précédentes, caractérisée en ce que les surfaces de paroi des pyramides tronquées (2, 3, 4) présentent une inclinaison (10), par rapport à la verticale, d'environ 5° jusqu'à environ 30° au maximum ou que l'angle au sommet du cône des pyramides tronquées (2, 3, 4) est choisi entre environ 10° et 60°.

8. Pièce moulée selon l'une des revendications précédentes, caractérisée en ce que l'épaisseur des feuilles de polyuréthane (7, 8) se situe entre 20 µm et 80 µm.

9. Pièce moulée selon la revendication 8, caractérisée en ce que l'épaisseur des feuilles de polyuréthane (7, 8) se situe entre 20 µm et 60 µm.

10. Pièce moulée selon l'une des revendications précédentes, caractérisée en ce que la pièce moulée (1) est posée, en particulier collée ou encliquetée, sur un support (5).

11. Pièce moulée selon la revendication 10, caractérisée en ce que le support (5) est le blindage du moteur.

12. Procédé pour fabriquer la pièce moulée selon l'une des revendications précédentes en utilisant un moule à injection sous vide pouvant être fermé, comportant un fond de moule et un couvercle de moule, caractérisé en ce que l'on ferme le moule à injection sous vide après avoir mis une feuille enveloppante respectivement sur le fond du moule et le couvercle du moule, tout en appliquant une dépression, et en ce que l'on injecte la mousse de polyuréthane, qui forme l'absorbeur, dans l'espace entre les deux feuilles enveloppantes, tout en refoulant le volume d'air présent.
